# EUROPEAN PATENT APPLICATION

(11) **EP 4 769 551 A1**
(43) Date of publication of application: **01.07.2026**
(21) Application number: 25227414.7
(22) Date of filing: 29.12.2025
(51) Int. Cl.: H01M 4/36, H01M 4/505, H01M 10/0525, H01M 10/0562

(54) **POSITIVE ELECTRODE MATERIAL COATED WITH MIXED SOLID-STATE ELECTROLYTE AND PREPARATION METHOD THEREOF, POSITIVE ELECTRODE PLATE, SOLID-STATE BATTERY, AND ELECTRICAL-RELATED DEVICE**

(30) Priority: 30.12.2024 CN 202411973255
(71) Applicant: Shenzhen BTR New Energy Technology Research Institute Co., Ltd., Shenzhen, Guangdong 518158 (CN)
(72) Inventor: Wang, Hongjiao, Shenzhen (CN); Chen, Yansen, Shenzhen (CN); Yang, Chenglin, Shenzhen (CN); Li, Zikun, Shenzhen (CN)
(74) Representative: Vogelbruch, Keang

(57) **Abstract**

Provided are a positive electrode material coated with a mixed solid-state electrolyte and a preparation method thereof, a positive electrode plate, a solid-state battery, and an electrical-related device. The positive electrode material coated with the mixed solid-state electrolyte includes a positive electrode material and a mixed solid-state electrolyte coating the surface of the positive electrode material, and the mixed solid-state electrolyte includes an oxide solid-state electrolyte, a sulfide solid-state electrolyte, and a halide solid-state electrolyte. By designing the positive electrode material coated with the mixed solid-state electrolyte, the oxide solid-state electrolyte provides mechanical properties, the sulfide solid-state electrolyte provides ionic conductivity, and the halide solid-state electrolyte provides a stable interface. The combination of the three solid-state electrolytes can effectively improve the structural stability and conductivity of the positive electrode material, thereby improving the cycle stability of the battery.

## Description

### TECHNICAL FIELD

The present invention relates to the field of new energy technology, and in particular to a positive electrode material coated with a mixed solid-state electrolyte and a preparation method thereof, a positive electrode plate, a solid-state battery, and an electrical-related device.

### BACKGROUND

With the growing global demand for clean energy, lithium-ion batteries, as an efficient and environmentally friendly energy storage solution, are widely used in various electronic devices and electric vehicles. However, traditional lithium-ion batteries mainly use liquid electrolytes, which have safety hazards such as flammability and explosion. Therefore, the development of safe and stable solid-state batteries has become an important research direction.

However, during the charging and discharging process of existing solid-state batteries, the poor stability at the interface between positive electrode materials and solid-state electrolytes can easily lead to battery capacity attenuation.

### SUMMARY

The purpose of the present invention is to provide a positive electrode material coated with a mixed solid-state electrolyte and a preparation method thereof, a positive electrode plate, a solid-state battery, and an electrical-related device, aiming to solve the poor stability at the interface between existing positive electrode materials and solid-state electrolytes, which can easily lead to capacity attenuation of solid-state batteries.

To achieve the above purpose, the present invention provides a positive electrode material coated with a mixed solid-state electrolyte, including a positive electrode material and a mixed solid-state electrolyte coating the surface of the positive electrode material, and the mixed solid-state electrolyte includes an oxide solid-state electrolyte, a sulfide solid-state electrolyte, and a halide solid-state electrolyte.

In some embodiments, the particle size of the sulfide solid-state electrolyte is larger than the particle size of the halide solid-state electrolyte, and the particle size of the halide solid-state electrolyte is larger than the particle size of the oxide solid-state electrolyte; and
optionally, the ratio of the particle size of the sulfide solid-state electrolyte, the particle size of the halide solid-state electrolyte, and the particle size of the oxide solid-state electrolyte is (100 to 500): (30 to 70): (2 to 7).

In some embodiments, at least one of the following conditions is met:
A. the particle size of the sulfide solid-state electrolyte is from 1 µm to 5 µm;
B. the particle size of the halide solid-state electrolyte is from 300 nm to 700 nm; and
C. the particle size of the oxide solid-state electrolyte is from 20 nm to 70 nm.

In some embodiments, the mass of the sulfide solid-state electrolyte is greater than the sum of the mass of the oxide solid-state electrolyte and the mass of the halide solid-state electrolyte; and
optionally, the mass ratio of the oxide solid-state electrolyte, the sulfide solid-state electrolyte, and the halide solid-state electrolyte is (0.1 to 1): 10: (0.5 to 5).

In some embodiments, the oxide solid-state electrolyte includes any one or more selected from the group consisting of Li₁₊ₓAlₓTi₂₋ₓ(PO₄)₃, Li₇₋ₓLa₃Zr₂₋ₓMₓO₁₂ (M = Ta or Nb) (0 ≤ x < 2), LiₓLa_{2/3-x}TiO₃, LiAlO₂, Li₂ZrO₃, and Li₄Ti₅O₁₂;
in some embodiments, the sulfide solid-state electrolyte includes any one or more selected from the group consisting of Li₃PS₄, 70Li₂S·30P₂S₅, 80Li₂S·20P₂S₅, 75Li₂S·25P₂S₅, Li₁₀GeP₂S₁₂, and Li₆PS₅X (X = Cl, Br, or I);
in some embodiments, the molecular formula of the halide solid-state electrolyte is Li₃AE₆, where A is a positive trivalent metal, preferably In, Sc, or Y, and E is at least one selected from the group consisting of F, Cl, and Br; and
in some embodiments, the positive electrode material includes any one of lithium iron phosphate, lithium cobalt oxide, lithium manganese oxide, lithium nickel oxide, binary material lithium nickel cobalt oxide, binary material lithium nickel manganese oxide, ternary material lithium nickel cobalt manganese oxide, ternary material lithium nickel cobalt aluminum oxide, a lithium-rich manganese-based positive electrode material, and modified dopants of lithium iron phosphate, lithium cobalt oxide, lithium manganese oxide, lithium nickel oxide, binary material lithium nickel cobalt oxide, binary material lithium nickel manganese oxide, ternary material lithium nickel cobalt manganese oxide, ternary material lithium nickel cobalt aluminum oxide, and the lithium-rich manganese-based positive electrode material.

In some embodiments, at least one of the following conditions is met:
A. the ratio of the total mass of the oxide solid-state electrolyte, the sulfide solid-state electrolyte, and the halide solid-state electrolyte to the mass of the positive electrode material is 1:2 to 2:1; and
B. the ionic conductivity of the mixed solid-state electrolyte at room temperature ranges from 10⁻⁴ S/cm to 10⁻² S/cm.

The present invention further provides a method for preparing the positive electrode material coated with the mixed solid-state electrolyte mentioned above, which includes the following steps:
mixing the oxide solid-state electrolyte, the sulfide solid-state electrolyte, and the halide solid-state electrolyte, to obtain a mixed solid-state electrolyte; and
coating the mixed solid-state electrolyte on the surface of the positive electrode material by ball milling, to obtain a positive electrode material coated with the mixed solid-state electrolyte.

The present invention further provides a positive electrode plate, including the positive electrode material coated with the mixed solid-state electrolyte mentioned above.

The present invention further provides a solid-state battery, including the positive electrode material coated with the mixed solid-state electrolyte mentioned above, or the positive electrode plate mentioned above.

The present invention further provides an electrical-related device, including the solid-state battery mentioned above.

Compared with the prior art, the present invention has the following beneficial effects.

The positive electrode material coated with the mixed solid-state electrolyte provided by the present invention includes a positive electrode material and a mixed solid-state electrolyte coating the surface of the positive electrode material, and the mixed solid-state electrolyte includes an oxide solid-state electrolyte, a sulfide solid-state electrolyte, and a halide solid-state electrolyte. By designing the positive electrode material coated with the mixed solid-state electrolyte according to the present invention, the oxide solid-state electrolyte provides mechanical properties, the sulfide solid-state electrolyte provides ionic conductivity, and the halide solid-state electrolyte provides a stable interface. The combination of the three solid-state electrolytes can effectively improve the structural stability and conductivity of the positive electrode material, thereby improving the cycle stability of the battery. Compared with the prior art, this method can more effectively improve the stability at the interface between the positive electrode material and the electrolyte, thereby reducing the battery capacity attenuation. The mixed solid-state electrolyte according to the present invention has high conductivity, thereby improving the charging and discharging efficiency of the battery. Compared with the prior art, this method can more effectively solve the problems of low conductivity and poor interface properties of the solid-state electrolyte, and improve the overall performance of the battery.

The sulfide full-solid-state battery provided by the present invention features a simple preparation process and low cost, which are conducive to large-scale application. Compared with the prior art, this method can more effectively solve the problems of complex preparation process and high cost of sulfide full-solid-state batteries, which is conducive to its practical application.

### BRIEF DESCRIPTION OF DRAWINGS

In order to more explicitly illustrate the technical solution of the embodiments of the present invention, the drawings required for the embodiments of the present invention are briefly described below. It should be understood that the following drawings only show some embodiments of the present invention and should not be construed as limiting the scope of the present invention.
FIG. 1 is a schematic diagram of a structure of an embodiment of a positive electrode material coated with a mixed solid-state electrolyte according to the present invention;
FIG. 2 is a flowchart of a method for preparing a positive electrode material coated with a mixed solid-state electrolyte according to the present invention; and
FIG. 3 is a SEM image of a positive electrode material coated with a mixed solid-state electrolyte of Example 1.

### DETAILED DESCRIPTION OF THE EMBODIMENTS

The terms used in the present invention are explained as follows.

The phrase "prepared by" is synonymous with the term "comprising". The terms "comprising", "including", "having", "containing", or any other variation thereof used herein are intended to cover a non-exclusive inclusion. For example, a composition, a step, a method, a product, or a device comprising the listed elements is not necessarily limited to only those elements, but may include other elements not expressly listed or elements inherent to such composition, step, method, product, or device.

The conjunction "consisting of" excludes any element, step, or component not identified. If used in a claim, this phrase will make the claim closed such that it excludes materials other than those described, except for usual impurities associated therewith. When the phrase "consisting of" appears in a clause of a claim body rather than immediately after the subject matter, it defines only elements described in the clause; and other elements are not excluded from the claim as a whole.

When equivalents, concentrations, or other values or parameters are indicated by ranges, preferred ranges, or ranges defined by a series of preferred values of upper and lower limits, it should be understood as specifically disclosing all ranges formed by any pair of any upper range limit or preferred value and any lower range limit or preferred value, regardless of whether the range is disclosed separately or not. For example, when a range "1 to 5" is disclosed, the range described should be construed to include ranges such as "1 to 4", "1 to 3", "1 to 2", "1 to 2 and 4 to 5", and "1 to 3 and 5". When a range of numerical values is described herein, unless otherwise specified, the range is intended to include both end values and all integers and fractions within that range.

In these embodiments, unless otherwise specified, parts and percentages are measured by mass.

"Parts by mass" refers to the basic unit of measurement that represents the mass ratio relationship of multiple components. For example, 1 part can represent any unit mass, such as 1 g or 2.689 g. For example, a parts by mass of component A and b parts by mass of component B mean that the mass ratio between component A and component B is a: b. Alternatively, it means that the mass of component A is aK and the mass of component B is bK (where K is an arbitrary number representing a multiple factor). It cannot be misunderstood that, unlike portions by mass, the sum of the parts by mass of all the components is not limited to 100 parts.

"And/or" is used to indicate that one or both of the two options are possible. For example, A and/or B includes (A and B) and (A or B).

Furthermore, the terms "first" and "second" are used merely for illustrative purposes and shall not be construed as indicating or implying relative importance or as implicitly specifying the number of technical features indicated. Thus, the features defined with the terms "first" and "second" may explicitly or implicitly include one or more of these features. Unless otherwise specifically defined, "a plurality of" means two or more in the description of the present invention.

The present invention provides a positive electrode material coated with a mixed solid-state electrolyte, including a positive electrode material and a mixed solid-state electrolyte coating the surface of the positive electrode material, and the mixed solid-state electrolyte includes an oxide solid-state electrolyte, a sulfide solid-state electrolyte, and a halide solid-state electrolyte.

By designing the positive electrode material coated with the mixed solid-state electrolyte according to the present invention, the oxide solid-state electrolyte provides mechanical properties, the sulfide solid-state electrolyte provides ionic conductivity, and the halide solid-state electrolyte provides a stable interface. The combination of the three solid-state electrolytes can effectively improve the structural stability and conductivity of the positive electrode material, thereby improving the cycle stability of the battery. Compared with the prior art, this method can more effectively improve the stability at the interface between the positive electrode material and the electrolyte, thereby reducing the battery capacity attenuation. The mixed solid-state electrolyte according to the present invention has high conductivity, thereby improving the charging and discharging efficiency of the battery. Compared with the prior art, this method can more effectively solve the problems of low conductivity and poor interface properties of the solid-state electrolyte, and improve the overall performance of the battery.

In some embodiments, the particle size of the sulfide solid-state electrolyte is larger than the particle size of the halide solid-state electrolyte, and the particle size of the halide solid-state electrolyte is larger than the particle size of the oxide solid-state electrolyte.

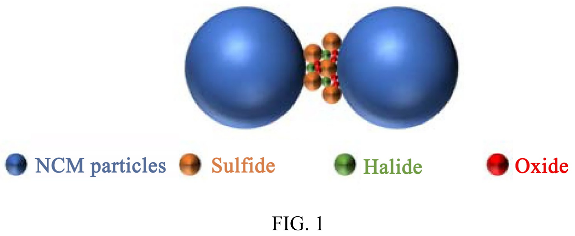

Referring to FIG. 1, FIG. 1 is a schematic diagram of a structure of an embodiment of a positive electrode material coated with a mixed solid-state electrolyte according to the present invention. Exemplarily, the positive electrode material in FIG. 1 is ternary material lithium nickel cobalt manganese oxide (NCM particles), the sulfide solid-state electrolyte (sulfide) appears as large particles, the halide solid-state electrolyte (halide) appears as medium particles, and the oxide solid-state electrolyte (oxide) appears as small particles.

The large sulfide solid-state electrolyte particles provide a fast ion transport channel and ensure the overall conductivity of the positive electrode. These large particles can reduce the total interface area, thereby reducing the interface resistance and the possibility of side reactions. The medium halide solid-state electrolyte particles are used to form an intermediate layer, which can buffer the chemical mismatch between the sulfide solid-state electrolyte and the NCM positive electrode, thereby reducing interface side reactions, and providing additional ion transport channels to maintain interface conductivity. The small oxide solid-state electrolyte particles are used to form a protective layer to prevent the NCM positive electrode from directly contacting the sulfide solid-state electrolyte, which can cause interface decomposition. These small particles have large specific surface areas, so that the small particles can be evenly distributed on the positive electrode surface to enhance the interface contact quality, thereby improving the mechanical stability of the positive electrode, and avoiding particle peeling or cracking due to volume changes during cycling.

The synergistic effect of the large sulfide solid-state electrolyte particles, medium halide solid-state electrolyte particles, and small oxide solid-state electrolyte particles can optimize ion conduction, as the large sulfide solid-state electrolyte particles provide the dominant ion transport channels, the medium halide solid-state electrolyte particles supplement the interface conductivity, and the small oxide solid-state electrolyte particles enhance the interface stability. This synergistic effect can also improve the interface stability, as the halide solid-state electrolyte and oxide solid-state electrolyte protect the interface between the sulfide solid-state electrolyte and the positive electrode chemically and mechanically respectively, thereby reducing interface decomposition and impedance growth. This synergistic effect of three materials can also extend the cycle life, as it not only improves ion conduction, but also slows down interface reactions, thereby improving the capacity retention rate of the battery.

Optionally, the ratio of the particle size of the sulfide solid-state electrolyte, the particle size of the halide solid-state electrolyte, and the particle size of the oxide solid-state electrolyte is (100 to 500): (30 to 70): (2 to 7).

In some embodiments, the particle size of the sulfide solid-state electrolyte ranges from 1 µm to 5 µm. For example, it can be 1 µm, 1.5 µm, 2 µm, 2.5 µm, 3 µm, 3.5 µm, 4 µm, 4.5 µm, 5 µm, or any value between 1 µm and 5 µm.

In some embodiments, the particle size of the halide solid-state electrolyte ranges from 300 nm to 700 nm. For example, it can be 300 nm, 350 nm, 400 nm, 450 nm, 500 nm, 550 nm, 600 nm, 650 nm, 700 nm, or any value between 300 nm and 700 nm.

In some embodiments, the particle size of the oxide solid-state electrolyte ranges from 20 nm to 70 nm. For example, it can be 20 nm, 30 nm, 35 nm, 40 nm, 45 nm, 50 nm, 55 nm, 60 nm, 65 nm, 70 nm, or any value between 20 nm and 70 nm.

In some embodiments, the mass of the sulfide solid-state electrolyte is greater than the sum of the mass of the oxide solid-state electrolyte and the mass of the halide solid-state electrolyte. The sulfide solid-state electrolyte features high conductivity and good flexibility, so that a large amount is needed to fill particle gaps and optimize the ion-conduction network. The halide solid-state electrolyte features moderate conductivity and flexibility, so that a relatively small amount can realize the balance between the interface stability and the conductivity. The oxide solid-state electrolyte features low conductivity but strong chemical stability, so that a small amount can meet the interface protection requirement, thereby maximizing the energy density of the battery.

In some embodiments, the mass ratio of the oxide solid-state electrolyte, the sulfide solid-state electrolyte, and the halide solid-state electrolyte ranges from (0.1 to 1): 10: (0.5 to 5). For example, it can be 0.1:10:0.5, 0.2:10:1, 0.5:10:1, 0.6:10:2, 1:10:5, 1:10:1, or any ratio within (0.1 to 1): 10: (0.5 to 5).

In some embodiments, the oxide solid-state electrolyte includes any one or more selected from the group consisting of Li₁₊ₓAlₓTi₂₋ₓ(PO₄)₃, Li₇₋ₓLa₃Zr₂₋ₓMₓO₁₂ (M = Ta or Nb) (0 ≤ x < 2), LiₓLa_{2/3-x}TiO₃, LiAlO₂, Li₂ZrO₃, and Li₄Ti₅O₁₂.

In some embodiments, the sulfide solid-state electrolyte includes any one or more selected from the group consisting of Li₃PS₄, 70Li₂S·30P₂S₅, 80Li₂S·20P₂S₅, 75Li₂S·25P₂S₅, Li₁₀GeP₂S₁₂ (LGPS), and Li₆PS₅X (X = Cl, Br, or I).

In some embodiments, the molecular formula of the halide solid-state electrolyte is Li₃AE₆, where A is a positive trivalent metal, preferably In, Sc, or Y, and E is at least one selected from the group consisting of F, Cl, and Br.

In some embodiments, the positive electrode material includes any one of lithium iron phosphate, lithium cobalt oxide, lithium manganese oxide, lithium nickel oxide, binary material lithium nickel cobalt oxide, binary material lithium nickel manganese oxide, ternary material lithium nickel cobalt manganese oxide, ternary material lithium nickel cobalt aluminum oxide, a lithium-rich manganese-based positive electrode material, and modified dopants of lithium iron phosphate, lithium cobalt oxide, lithium manganese oxide, lithium nickel oxide, binary material lithium nickel cobalt oxide, binary material lithium nickel manganese oxide, ternary material lithium nickel cobalt manganese oxide, ternary material lithium nickel cobalt aluminum oxide, and the lithium-rich manganese-based positive electrode material.

In some embodiments, the ratio of the total mass of the oxide solid-state electrolyte, the sulfide solid-state electrolyte, and the halide solid-state electrolyte to the mass of the positive electrode material ranges from 1:2 to 2:1. For example, it can be 1:2, 1:1, 3:2, 2:1, or any ratio between 1:2 and 2:1.

In some embodiments, the ionic conductivity of the mixed solid-state electrolyte at room temperature ranges from 10⁻⁴ S/cm to 10⁻² S/cm.

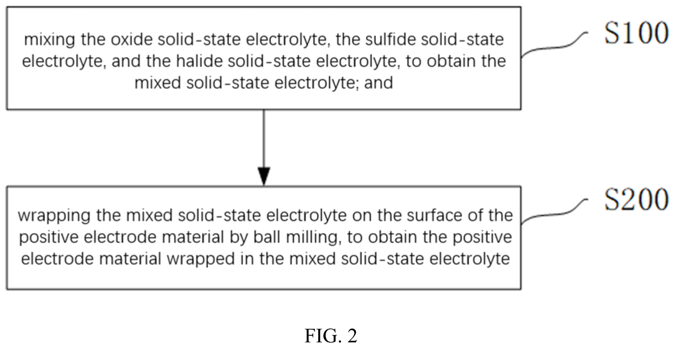

The present invention further provides a method for preparing the positive electrode material coated with the mixed solid-state electrolyte mentioned above. Referring to FIG. 2, the method includes the following steps:
S100: mixing the oxide solid-state electrolyte, the sulfide solid-state electrolyte, and the halide solid-state electrolyte, to obtain a mixed solid-state electrolyte; and
S200: coating the mixed solid-state electrolyte on the surface of the positive electrode material by ball milling, to obtain a positive electrode material coated with the mixed solid-state electrolyte.

The present invention further provides a positive electrode plate, including the positive electrode material coated with the mixed solid-state electrolyte mentioned above.

The present invention further provides a solid-state battery, including the positive electrode material coated with the mixed solid-state electrolyte mentioned above, or the positive electrode plate mentioned above.

The sulfide full-solid-state battery provided by the present invention features a simple preparation process and low cost, which are conducive to large-scale application. Compared with the prior art, this method can more effectively solve the problems of complex preparation process and high cost of sulfide full-solid-state batteries, which is conducive to its practical application.

The present invention further provides an electrical-related device, including the solid-state battery mentioned above.

The present invention further provides a mixed solid-state electrolyte, including an oxide solid-state electrolyte, a sulfide solid-state electrolyte, and a halide solid-state electrolyte; and
the particle size of the sulfide solid-state electrolyte is larger than the particle size of the halide solid-state electrolyte, and the particle size of the halide solid-state electrolyte is larger than the particle size of the oxide solid-state electrolyte.

In some embodiments, the ratio of the particle size of the sulfide solid-state electrolyte, the particle size of the halide solid-state electrolyte, and the particle size of the oxide solid-state electrolyte is (100 to 500): (30 to 70): (2 to 7).

In some embodiments, the mixed solid-state electrolyte meets at least one of the following conditions:
A. the particle size of the sulfide solid-state electrolyte is from 1 µm to 5 µm;
B. the particle size of the halide solid-state electrolyte is from 300 nm to 700 nm; and
C. the particle size of the oxide solid-state electrolyte is from 20 nm to 70 nm.

In some embodiments, the mass of the sulfide solid-state electrolyte is greater than the sum of the mass of the oxide solid-state electrolyte and the mass of the halide solid-state electrolyte.

In some embodiments, the mass ratio of the oxide solid-state electrolyte, the sulfide solid-state electrolyte, and the halide solid-state electrolyte is (0.1 to 1): 10: (0.5 to 5).

In some embodiments, the mixed solid-state electrolyte meets at least one of the following conditions:
A. the oxide solid-state electrolyte comprises any one or more selected from the group consisting of Li₁₊ₓAlₓTi₂₋ₓ(PO₄)₃, Li₇₋ₓLa₃Zr₂₋ₓMₓO₁₂ (M = Ta or Nb) (0 ≤ x < 2), LiₓLa_{2/3-x}TiO₃, LiAlO₂, Li₂ZrO₃, and Li₄Ti₅O₁₂;
B. the sulfide solid-state electrolyte comprises any one or more selected from the group consisting of Li₃PS₄, 70Li₂S·30P₂S₅, 80Li₂S·20P₂S₅, 75Li₂S·25P₂S₅, Li₁₀GeP₂S₁₂, and Li₆PS₅X (X = Cl, Br, or I);
C. the molecular formula of the halide solid-state electrolyte is Li₃AE₆, where A is a positive trivalent metal, preferably In, Sc, or Y, and E is at least one selected from the group consisting of F, Cl, and Br; and
D. the ionic conductivity of the mixed solid-state electrolyte at room temperature ranges from 10⁻⁴ S/cm to 10⁻² S/cm.

The embodiments of the present invention will be described in detail below in combination with specific embodiments. Those skilled in the art will understand that the following embodiments are only used to illustrate the present invention and should not be regarded as limiting the scope of the present invention. Conditions not explicitly stated in the embodiments shall be understood as conventional conditions or conditions recommended by manufacturers. Reagents or instruments used herein for which the manufacturer is not specified are all commercially available conventional products.

### Example 1

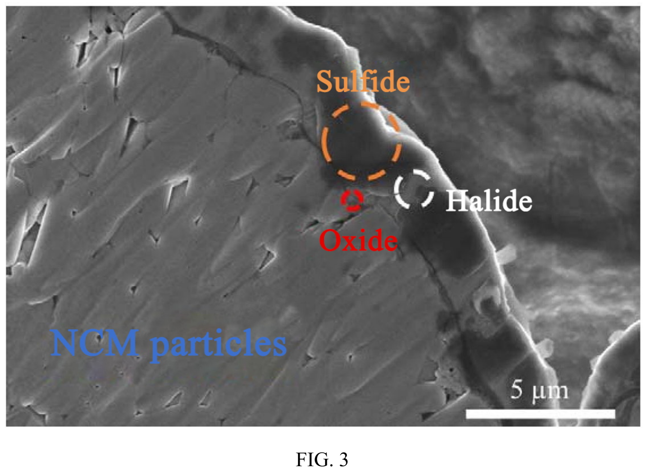

This example provided a positive electrode material coated with a mixed solid-state electrolyte, and its preparation method included the following steps:
Step 1: selecting oxide solid-state electrolyte Li₇La₃Zr₂O₁₂ (LLZO) with high conductivity and a particle size of 50 nm, sulfide solid-state electrolyte Li₆PS₅Cl with a particle size of 3 µm, and halide solid-state electrolyte Li₃InCl₆ with a particle size of 500 nm; then, mixing 10 mg LLZO, 200 mg LiPSCl, and 20 mg Li₃InCl₆, to obtain a mixed solid-state electrolyte. The conductivity of the mixed solid-state electrolyte was 1.5*10⁻³ S/cm and can exist stably at room temperature.
Step 2: preparing the positive electrode material coated with the mixed solid-state electrolyte by ball milling, including first uniformly mixing the ternary material lithium nickel cobalt manganese oxide as the positive electrode material and the mixed solid-state electrolyte obtained in Step 1 at a mass ratio of 1:1 by ball milling at a speed of 100 rpm for 2 h, to obtain the positive electrode material coated with the mixed solid-state electrolyte in Example 1. Its SEM image is shown in FIG. 3.

This embodiment further provided a sulfide full-solid-state battery, and its preparation method included the following steps:
assembling the positive electrode material coated with the mixed solid-state electrolyte in Example 1, the sulfide solid-state electrolyte (Li₆PS₅Cl), and a negative electrode material (Li metal) together to form a sulfide full-solid-state battery. The specific operation steps included mixing the positive electrode material, the sulfide solid-state electrolyte, and the negative electrode material in a mass ratio of 1:1:1, and then pressing them by hot pressing at 500°C and 500 MPa for 2 h under argon protection, to obtain the sulfide full-solid-state battery in Example 1.

Performance testing of the prepared sulfide full-solid-state battery was carried out. The testing was performed by charging and discharging at room temperature with a current density of 0.1 C, and the voltage range of 2.5 V to 4.2 V.

### Example 2

This example provided a positive electrode material coated with a mixed solid-state electrolyte. The difference between its preparation method and that in Example 1 lies in that in Example 2, the oxide solid-state electrolyte was replaced with LATP, and the other steps were the same as those in Example 1.

### Example 3

This example provided a positive electrode material coated with a mixed solid-state electrolyte. The difference between its preparation method and that in Example 1 lies in that Li₃InCl₆ was replaced with Li₃ScCl₆, and the other steps were the same as those in Example 1.

### Example 4

This example provided a positive electrode material coated with a mixed solid-state electrolyte. The difference between its preparation method and that in Example 1 lies in that in Example 4, the mass of the sulfide solid-state electrolyte was 100 mg, and the other steps were the same as those in Example 1.

### Example 5

This example provided a positive electrode material coated with a mixed solid-state electrolyte. The difference between its preparation method and that in Example 1 lies in that in Example 5, the mass of the halide solid-state electrolyte was 10 mg, and the other steps were the same as those in Example 1.

### Example 6

This example provided a positive electrode material coated with a mixed solid-state electrolyte. The difference between its preparation method and that in Example 1 lies in that the particle size of the oxide solid-state electrolyte was 30 nm, the particle size of the sulfide solid-state electrolyte was 1 µm, the particle size of the halide solid-state electrolyte was 300 nm, and the other steps were the same as those in Example 1.

### Example 7

This example provided a positive electrode material coated with a mixed solid-state electrolyte. The difference between its preparation method and that in Example 1 lies in that the particle size of the oxide solid-state electrolyte was 70 nm, the particle size of the sulfide solid-state electrolyte was 5 µm, the particle size of the halide solid-state electrolyte was 700 nm, and the other steps were the same as those in Example 1.

### Comparative Example 1

This comparative example provided a positive electrode material coated with a solid-state electrolyte. The difference between its preparation method and that in Example 1 lies in that in Comparative Example 1, the solid-state electrolyte included an oxide solid-state electrolyte only, and the other steps were the same as those in Example 1.

### Comparative Example 2

This comparative example provided a positive electrode material coated with a solid-state electrolyte. The difference between its preparation method and that in Example 1 lies in that in Comparative Example 2, the solid-state electrolyte included a sulfide solid-state electrolyte only, and the other steps were the same as those in Example 1.

### Comparative Example 3

This comparative example provided a positive electrode material coated with a solid-state electrolyte. The difference between its preparation method and that in Example 1 lies in that in Comparative Example 3, the solid-state electrolyte included a halide solid-state electrolyte only, and the other steps were the same as those in Example 1.

### Comparative Example 4

This comparative example provided a positive electrode material coated with a mixed solid-state electrolyte. The difference between its preparation method and that in Example 1 lies in that in Comparative Example 4, the solid-state electrolyte included an oxide solid-state electrolyte and a halide solid-state electrolyte only, and the other steps were the same as those in Example 1.

### Comparative Example 5

This comparative example provided a positive electrode material coated with a mixed solid-state electrolyte. The difference between its preparation method and that in Example 1 lies in that in Comparative Example 5, the solid-state electrolyte included a halide solid-state electrolyte and a sulfide solid-state electrolyte only, and the other steps were the same as those in Example 1.

### Comparative Example 6

This comparative example provided a positive electrode material coated with a mixed solid-state electrolyte. The difference between its preparation method and that in Example 1 lies in that in Comparative Example 6, the solid-state electrolyte included an oxide solid-state electrolyte and a sulfide solid-state electrolyte only, and the other steps were the same as those in Example 1.

### Comparative Example 7

This comparative example provided a positive electrode material coated with a mixed solid-state electrolyte. The difference between its preparation method and that in Example 1 lies in that the particle size of the oxide solid-state electrolyte was 80 nm, and the other steps were the same as those in Example 1.

### Comparative Example 8

This comparative example provided a positive electrode material coated with a mixed solid-state electrolyte. The difference between its preparation method and that in Example 1 lies in that the particle size of the oxide solid-state electrolyte was 10 nm, and the other steps were the same as those in Example 1.

### Comparative Example 9

This comparative example provided a positive electrode material coated with a mixed solid-state electrolyte. The difference between its preparation method and that in Example 1 lies in that the particle size of the sulfide solid-state electrolyte was 6 µm, and the other steps were the same as those in Example 1.

### Comparative Example 10

This comparative example provided a positive electrode material coated with a mixed solid-state electrolyte. The difference between its preparation method and that in Example 1 lies in that the particle size of the sulfide solid-state electrolyte was 0.9 µm, and the other steps were the same as those in Example 1.

### Comparative Example 11

This comparative example provided a positive electrode material coated with a mixed solid-state electrolyte. The difference between its preparation method and that in Example 1 lies in that the particle size of the halide solid-state electrolyte was 800 nm, and the other steps were the same as those in Example 1.

### Comparative Example 12

This comparative example provided a positive electrode material coated with a mixed solid-state electrolyte. The difference between its preparation method and that in Example 1 lies in that the particle size of the halide solid-state electrolyte was 200 nm, and the other steps were the same as those in Example 1.

### Comparative Example 13

This comparative example provided a positive electrode material coated with a mixed solid-state electrolyte. The difference between its preparation method and that in Example 1 lies in that in Comparative Example 13, the halide solid-state electrolyte was replaced with Li₃ZrCl₇, and the other steps were the same as those in Example 1.

The impedance testing method of the battery was as follows:
1. grinding the mixed solid-state electrolyte, weighing 100 mg to 200 mg into a solid-state battery test die (Zhongke Wanyuan, model: JYGS1-10, inner diameter: 10 mm), with stainless steel blocking electrodes at both ends, using a 3 T to 6 T tablet press to hold the pressure at 2.5 T to 3.5 T for 1 min to 10 min, then using a Bio-Logic analyzer, with setting the frequency at 1 MHz to 1 Hz, to obtain the data;
2. based on an equivalent circuit model (such as a series resistance and capacitance model), fitting the data and calculating the resistance value (R) of the electrolyte, which is usually the x-axis intercept in the high-frequency region; and
3. taking out the solid-state electrolyte, measuring the thickness 1 and radius r of the solid-state electrolyte ceramic sheet with a screw micrometer, and calculating the ionic conductivity at room temperature with the formula σ = 1/Rπr².

Precautions: 1. Sample environment: The test environment should be dry to avoid performance degradation of hygroscopic electrolytes (such as sulfide). 2. Signal stability: Multiple measurements should be conducted to ensure data consistency.

The electrochemical properties of the sulfide full-solid-state batteries obtained in embodiments and comparative examples are shown in Table 1.

**Table 1 Electrochemical properties of sulfide full-solid-state batteries obtained in embodiments and comparative examples**

| No. | Battery impedance (Ω) | Battery impedance after 100 cycles (Ω) | Specific discharge capacity (mAh/g) | Capacity retention rate after 100 cycles |
|---|---|---|---|---|
| Example 1 | 212 | 305 | 165 | 85% |
| Example 2 | 224 | 360 | 161 | 79% |
| Example 3 | 235 | 375 | 158 | 73% |
| Example 4 | 205 | 410 | 160 | 71% |
| Example 5 | 198 | 450 | 161 | 74% |
| Example 6 | 219 | 380 | 161 | 75% |
| Example 7 | 238 | 421 | 162 | 71% |
| Comparative Example 1 | 191 | 604 | 152 | 62% |
| Comparative Example 2 | 142 | 565 | 162 | 70% |
| Comparative Example 3 | 165 | 572 | 155 | 65% |
| Comparative Example 4 | 182 | 525 | 157 | 64% |
| Comparative Example 5 | 167 | 512 | 153 | 62% |
| Comparative Example 6 | 153 | 506 | 156 | 66% |
| Comparative Example 7 | 230 | 365 | 147 | 67% |
| Comparative Example 8 | 235 | 354 | 142 | 63% |
| Comparative Example 9 | 242 | 352 | 148 | 65% |
| Comparative Example 10 | 239 | 360 | 151 | 57% |
| Comparative Example 11 | 245 | 358 | 145 | 64% |
| Comparative Example 12 | 241 | 355 | 143 | 69% |
| Comparative Example 13 | 235 | 380 | 149 | 58% |

As can be seen from Table 1, in Examples 1 to 7 and Comparative Examples 7 to 12, in which three solid-state electrolytes are mixed to coat the surface of the positive electrode material, the battery impedance is greatly reduced after 100 cycles, that is to say, the conductivity of the positive electrode material is higher than that in Comparative Examples 1 to 6, in which only one or two solid-state electrolytes are used to coat the surface of the positive electrode material. Moreover, in Examples 1 to 7, appropriate amount ratios and particle size ratios of the three solid-state electrolytes can improve the structural stability of the positive electrode material, so that the capacity retention rate after 100 cycles is higher than that in Comparative Examples 7 to 12. Comparative Example 13 shows that the halide solid-state electrolyte Li₃ZrCl₇ used in Comparative Example 13 does not contribute much to the stability of the positive electrode material, due to the low ionic conductivity and poor electrochemical stability of Li₃ZrCl₇.

Finally, it should be noted that the above embodiments are only used to illustrate the technical solutions of the present invention and not to limit them. Although the present invention is described in detail with reference to the above embodiments, those skilled in the art shall understand that they can still modify the technical solutions recorded in the above embodiments or equivalently replace part or all of the technical features therein. Such modifications or replacements shall not cause the essence of the corresponding technical solutions to depart from the scope of the technical solutions of the embodiments of the present invention.

In addition, those skilled in the art can understand that although some embodiments herein include certain features included in other embodiments but not other features, combinations of features in different embodiments are within the scope of the present invention, and form different embodiments. For example, in the claims, any one of the claimed embodiments can be used in any combination. The information disclosed in this Background is only for enhancement of understanding of the general background technologies of the present invention, and should not be taken as an acknowledgment or any form of suggestion that this information forms the prior art already known to those skilled in the art.

## Claims

1. A positive electrode material coated with a mixed solid-state electrolyte, **characterized by** comprising a positive electrode material and a mixed solid-state electrolyte coating the surface of the positive electrode material, wherein the mixed solid-state electrolyte comprises an oxide solid-state electrolyte, a sulfide solid-state electrolyte, and a halide solid-state electrolyte,
wherein the particle size of the sulfide solid-state electrolyte is from 1 µm to 5 µm;
the particle size of the halide solid-state electrolyte is from 300 nm to 700 nm;
the particle size of the oxide solid-state electrolyte is from 20 nm to 70 nm; and
a molecular formula of the halide solid-state electrolyte is Li₃AE₆, wherein A is In, Sc, or Y, and E is at least one selected from the group consisting of F, Cl, and Br.

2. The positive electrode material coated with the mixed solid-state electrolyte according to claim 1, wherein a mass of the sulfide solid-state electrolyte is greater than a sum of a mass of the oxide solid-state electrolyte and a mass of the halide solid-state electrolyte.

3. The positive electrode material coated with the mixed solid-state electrolyte according to claim 1, wherein a mass ratio of the oxide solid-state electrolyte, the sulfide solid-state electrolyte, and the halide solid-state electrolyte is (0.1 to 1): 10: (0.5 to 5).

4. The positive electrode material coated with the mixed solid-state electrolyte according to claim 1, wherein at least one of following conditions is met:
A. the oxide solid-state electrolyte comprises any one or more selected from the group consisting of Li₁₊ₓAlₓTi₂₋ₓ(PO₄)₃, Li₇₋ₓLa₃Zr₂₋ₓMₓO₁₂, LiₓLa_{2/3-x}TiO₃, LiAlO2, Li₂ZrO₃, and Li₄Ti₅O₁₂, wherein 0 ≤ x < 2 and M is Ta or Nb;
B. the sulfide solid-state electrolyte comprises any one or more selected from the group consisting of Li₃PS₄, 70Li₂S·30P₂S₅, 80Li₂S·20P₂S₅, 75Li₂S·25P₂S₅, Li₁₀GeP₂S₁₂, and Li₆PS₅X, wherein X = Cl, Br, or I; and
C. the positive electrode material comprises any one of lithium iron phosphate, lithium cobalt oxide, lithium manganese oxide, lithium nickel oxide, binary material lithium nickel cobalt oxide, binary material lithium nickel manganese oxide, ternary material lithium nickel cobalt manganese oxide, ternary material lithium nickel cobalt aluminum oxide, modified dopants of lithium iron phosphate, modified dopants of lithium cobalt oxide, modified dopants of lithium manganese oxide, modified dopants of lithium nickel oxide, modified dopants of binary material lithium nickel cobalt oxide, modified dopants of binary material lithium nickel manganese oxide, modified dopants of ternary material lithium nickel cobalt manganese oxide, and modified dopants of ternary material lithium nickel cobalt aluminum oxide.

5. The positive electrode material coated with the mixed solid-state electrolyte according to any one of claims 1 to 4, wherein at least one of following conditions is met:
A. a ratio of a total mass of the oxide solid-state electrolyte, the sulfide solid-state electrolyte, and the halide solid-state electrolyte to a mass of the positive electrode material is 1:2 to 2:1; and
B. an ionic conductivity of the mixed solid-state electrolyte at room temperature ranges from 10⁻⁴ S/cm to 10⁻² S/cm.

6. A method for preparing the positive electrode material coated with the mixed solid-state electrolyte according to any one of claims 1 to 5, **characterized by** comprising:
mixing the oxide solid-state electrolyte, the sulfide solid-state electrolyte, and the halide solid-state electrolyte, to obtain the mixed solid-state electrolyte; and
coating the mixed solid-state electrolyte on the surface of the positive electrode material by ball milling, to obtain the positive electrode material coated with the mixed solid-state electrolyte.

7. A positive electrode plate, **characterized by** comprising the positive electrode material coated with the mixed solid-state electrolyte according to any one of claims 1 to 5.

8. A solid-state battery, **characterized by** comprising the positive electrode material coated with the mixed solid-state electrolyte according to any one of claims 1 to 5, or the positive electrode plate according to claim 7.

9. An electrical-related device, **characterized by** comprising the solid-state battery according to claim 8.
